# EUROPEAN PATENT APPLICATION

(11) **EP 2 482 067 A1**
(43) Date of publication of application: **01.08.2012**
(21) Application number: 12152750.1
(22) Date of filing: 26.01.2012
(51) Int. Cl.: G01N 27/90, G06T 7/00

(54) **A non-destructive test method for automatic fastener inspection**

(30) Priority: 28.01.2011 GB 201101468
(71) Applicant: GE Inspection Technologies Ltd, Luton, Bedfordshire LU2 8DL (GB)
(72) Inventor: Qiao, Xiaoyu, Hatfield, Hertfordshire AL10 9FL (GB); Mayes, Ian, St. Albans, Hertfordshire AL1 5HL (GB)
(74) Representative: Illingworth-Law, William Illingworth

(57) **Abstract**

A non destructive method for automatically inspecting defects close to or under fasteners is disclosed. The method comprises: acquiring an image containing one or more fasteners, referred to as the acquired Image, then acquiring or selecting from the acquired image a second image of a fastener in known good material, referred to as the reference image. Using the reference image, all instances of the fastener in the acquired image are auto-located. Information in the acquired image that relates to the material of the fastener is removed and then the resultant image may be inspected to look for defects in the parent material that lie at or close to the fasteners. As the images of the fasteners are removed from the acquired image, it is far easier for any flaws to be identified. Thus, flaws may be identified far more reliably and quickly.

## Description

This invention relates to non-destructive testing for flaws, such as cracks and metal loss due to corrosion or erosion extending from an aperture in sheet metal for example, and is particularly useful for the rapid scanning of aircraft lap joints in the region of fasteners, such as rivets.

The presence of flaws close to a fastener is generally not easily detected as the signal from a fastener is strong and can mask the signals from the flaw, particularly if they are deep in the structure, such as in the second or third layer of a lapped joint.

Because flaws can lie underneath fasteners or below the surface of the parent material, it is preferable if the non-destructive technique employed is capable of acquiring subsurface information. For metals, eddy current testing methods are a strong candidate. Structures can be inspected by scanning a simple eddy current probe over the surface of the structure and recording the signal as a function of position. Alternatively arrays of eddy current probes can be used to acquire data simultaneously from a number of positions for performing rapid area scanning by electronically multiplexing the probes. The eddy current sensor can be a simple coil or group of coils connected in absolute, reflection or differential configuration. Alternatively, the sensor may be a solid-state magnetic field sensor such as GMR or Hall effect sensor for example.

One method of detecting fatigue cracks around fasteners is the rotating eddy current probe disclosed in GB 2273782A invented by Lale. However such probes require the user to identify a fastener, center the probe on the fastener and then rotate the probe. It would be desirable to have a faster technique for automatically identifying the fastener's position and effectively detecting flaws around them.

An object of an embodiment of the present invention is to provide a method of rapidly scanning structures containing fasteners and then processing the data so that any flaws can be revealed and assessed.

According to a first aspect of the present invention there is provided a method for inspecting defects close to fasteners, the method comprising:
scanning an object containing one or more fasteners with an eddy current probe and forming an image, referred to as an acquired image, representing the measured signal as a function of position,
acquiring or selecting from the acquired image a second image of a substantially defect free fastener, referred to as the reference image,
using the reference image to automatically find instances of the fastener's locations in the acquired image, and removing information from the acquired image that relates to the material of the defect free fastener to provide a resultant image that may be inspected to look for flaws in the object that lie at or close to the fasteners.

Information relating to flaws in and around a fastener, including sub-surface flaws, is more easily identifiable by removing information/signals/data relating to the defect free fastener. Thus flaws may be found more reliably and quickly.

According to a second aspect of the present invention there is provided a system for inspecting defects close to fasteners, the system comprising:
an eddy current probe for scanning an object containing one or more fasteners and
a controller connectable to or including a screen, the controller being arranged to:
   form an image, referred to as an acquired image, representing the measured signal as a function of position;
   acquire an image of a substantially defect free fastener, referred to as a reference image;
   use the reference image to automatically find instances of all the fasteners in the acquired image and
   remove information in the acquired image that relates to the material of the defect free fastener to provide a resultant image.

Embodiments of the present invention will now be described, by way of example only, with reference to the accompanying drawings, in which:
Figure 1 illustrates a method of an embodiment of the present invention;
Figure 2 shows an eddy current instrument and array probe;
Figure 3 illustrates results obtained using an embodiment of the present invention; and
Figure 4 illustrates a more detailed embodiment of the present invention.

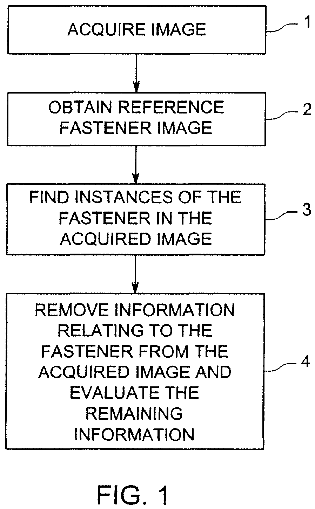

Figure 1 illustrates a method of an embodiment of the present invention. At step 1 an image is acquired by scanning an object such as an aircraft panel or pipeline section for example containing one or more fasteners such as rivets with an eddy current probe. The acquired image represents the measured signal as a function of position.

At step 2 a reference image of a substantially defect free fastener is obtained. The reference image of the fastener may be selected from a fastener in known good material from the acquired image or from elsewhere such as a pre-prepared library or look-up table of fasteners.

At step 3 instances of the fastener in the acquired image are found using the reference fastener image.

At step 4 information in the acquired image such as image data or signal data for example relating to the material of the defect free fastener is removed to provide a resultant image that may be inspected to look for flaws in the object that lie at or close to the fasteners.

As the images of the fasteners are removed from the acquired image, it is far easier for any flaws to be identified. Thus flows may be identified far more reliably and quickly.

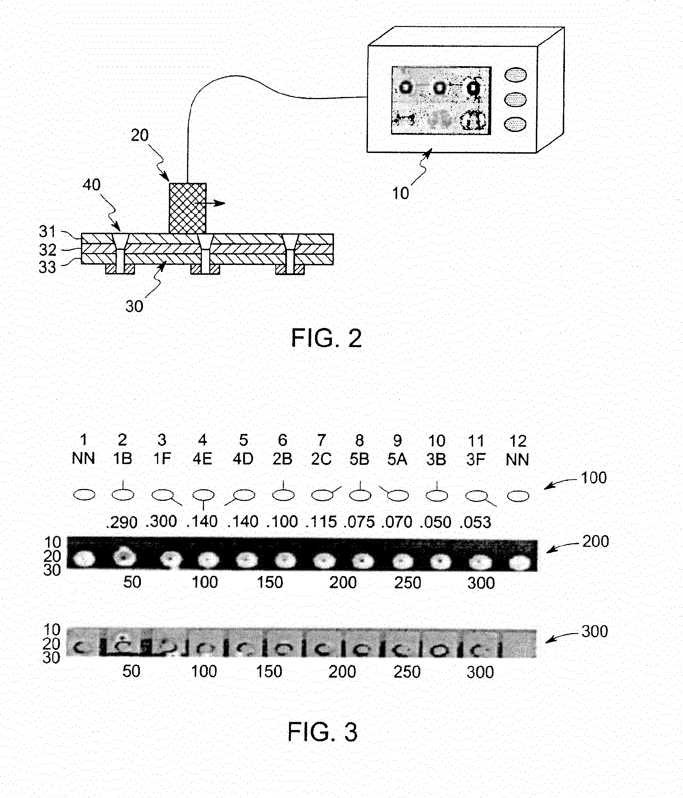

Figure 2 shows an Eddy Current instrument 10 and array probe 20. In use, the probe 20 is scanned over the surface of an object 30 to be tested, such as an aircraft panel for example, which in this example has three layers 31, 32, 33 containing a number of fasteners or rivets 40. The probe 20 in this example comprises a series of eddy current sensors, typically coils of wire that are used to excite eddy currents in the object and sense their magnitude. The probe 20 includes or is attached to an encoder which is used to determine the position of the probe 20 and the signals from the Eddy current sensors are displayed as an acquired image, for example as a 'C-scan', representing signal intensity as a function of position. The eddy current signal is processed by a suitable controller such a microprocessor provided in or attached to the Eddy Current instrument 10 so that any features or flaws in the object are clearly differentiated from the background material.

From the C-scan image a region is selected that represents a typical rivet in defect free material. This region is referred to as a 'reference image' and is used to auto-locate all the other rivets in the acquired image. Alternatively the reference image can be obtained from a second object or may have been previously measured and stored as a library image. The approximate position of the rivets in the acquired image may be automatically traced by this invention method. Based on a normalized cross-correlation technique, for each pixel in the acquired image, its corresponding sub-image in the acquired image is defined. The pixel related sub-image is of the same size as the reference image and centralized on the pixel. A related similarity value is evaluated between the reference image and pixel's related sub-image. One similarity value is assigned to each pixel position in the acquired image to form a similarity index map, with high values indicating a high degree of similarity. A threshold is applied to the assigned similarity index map to remove those values that indicate a poor match.

The rivets 40 may be located using a search algorithm that focuses on areas of similarity that exceed the threshold value, and so are considered to be high similarity regions. A search window may be defined that is no greater than the size of the reference image and which may have an odd number of pixels along each side. The window may follow a search pattern that involves moving in such a way that the highest similarity value always lies in the center of the search window. Preferably the search paths for any given rivet should end on the pixel representing the highest similarity value for that rivet local region. In practice a number of different, but very closely spaced end points may be found.

The true rivet alignment centers are found by searching the list of highest similarity values, which may be the end points, eliminating duplicate positions and removing all the points in the cluster that are less than the maximum value. A cluster is defined as a plurality of points that lie within a fixed distance of each other, this distance being less than the rivet spacing. At the end of this process only one position value for each of the rivets in the original image remains and these points are assumed to be the alignment centers of identified rivets.

The signal due to the rivet is removed by subtracting pixel by pixel the reference image from the acquired image at each of the rivet locations. The subtraction is performed with the reference image centered on the auto-traced alignment centers of the rivets. Whilst, a straight subtraction can be used it is often desirable to base the subtraction on energy, rather than intensity by subtracting the square of the pixel value in the reference image from the square of the corresponding pixel value in the acquired image.

The final step in the process is to add an offset that represents the average background value in the reference image. This value can be obtained in a number of ways, but one way is to use the average of the values of the pixels that lie close to the edge of the reference image. The offset is applied to all the pixels that were subject to the subtraction process.

Figure 3 shows a set of fasteners numbered 1 to 12 provided in an object with flaws of varying sizes around the fasteners. The row numbered 100 indicates the location around the fastener and the size in inches of the flaw for each fastener. As can be seen, the fasteners numbered 1 and 12 have no flaws.

The row numbered 200 provides a conventional eddy current image around each fastener. As can be seen, only the flaws around fasteners numbered 2 and 3 can be clearly seen. The flaws around the remaining fasteners are likely to be missed by an operator.

The row numbered 300 provides an image from a method of an embodiment of the present invention. As can be seen, the flaws of much smaller sizes than those identified in the conventional system shown in row 200 are clearly visible in row 300 providing far more useful information to an operator and significantly increasing the likelihood of identifying a flaw that can then be repaired or monitored.

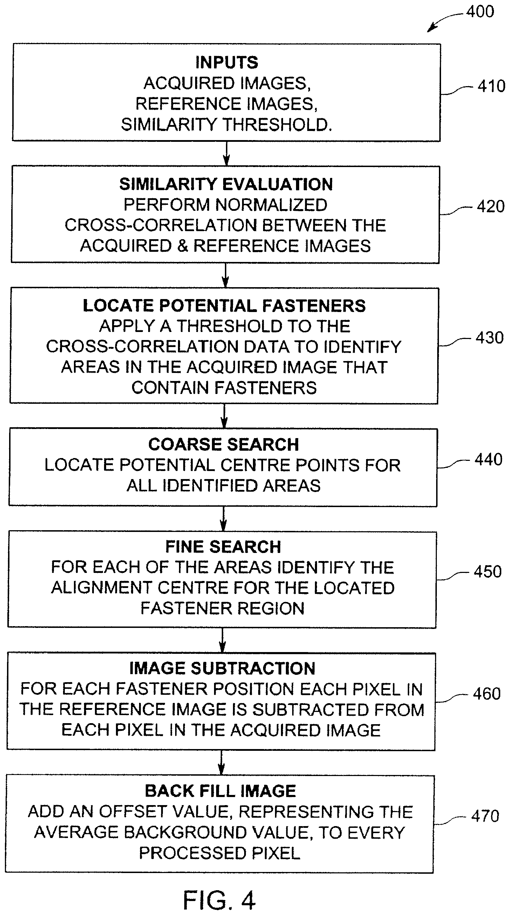

Figure 4 shows a more detailed example of the method of an embodiment of the present invention. At step 410 the various inputs are entered into the system, namely the acquiring of an image as a function of position using an eddy current probe 20, obtaining a reference fastener image, for example by selecting from the acquired image a second image of a fastener 40 in known good material or a library image of a fastener for example from a look-up table. A threshold for finding instances of the fastener in the acquired image is also input to the system.

At step 420 a similarity evaluation is performed, in this example by performing a normalized cross-correlation between the acquired and reference images.

At step 430 potential fasteners in the acquired image are located by applying the previously input similarity threshold to calculate similarity data to identify areas in the acquired image that can contain fasteners.

At steps 440 and 450 a coarse search is performed to locate potential centre points for all identified areas and then a fine search is performed for each of the identified areas to provide a value representing the alignment centre of the fastener identified.

At step 460 for each fastener position identified, each pixel in the reference image is subtracted from each pixel in the acquired image.

At step 470 an offset value, representing the average background value, is applied to each of the identified processed pixels.

As explained above and illustrated with the results of our Figure 3, embodiments of the present invention enable flaws around fasteners, such as rivets for example to be far more easily detected so that they may be repaired or monitored. Use of embodiments of the present invention also enable testing to be performed far more quickly than conventional systems.

Many variations may be made to the examples described above without departing from the scope of the present invention. For example, reference fastener images may be stored prior to use in a library or look-up table or may be obtained during use, for example from a fastener in known good material in the acquired image. Furthermore, instead of determining the similarity between regions of the acquired image and the reference image by normalized cross-correlation, similarity may be determined by any desired method, such as cross-correlation, or by comparing the Fourier coefficients wavelet coefficients from both regions or by obtaining similar features by a principal component method and using a neural network to recognize them for example.

## Claims

1. A method for inspecting defects close to fasteners, the method comprising:
scanning an object containing one or more fasteners with an eddy current probe and forming an image, referred to as an acquired image, representing the measured signal as a function of position,
acquiring or selecting from the acquired image a second image of a defect free fastener, referred to as the reference image,
using the reference image to find instances of the fastener in the acquired image, and
removing information from the acquired image that relates to the material of the defect free fastener to provide a resultant image that may be inspected to look for flaws in the object that lie at, around, under or close to the fasteners.

2. A method according to claim 1, wherein the position of the fasteners is found by comparing the acquired and reference images to find regions of similarity, selecting the regions with higher similarity by applying a threshold criterion and then locating the alignment centre of each region by using a search algorithm that looks for the local maximum.

3. A method according to claim 2, wherein the alignment centre of each region is located by using a search window that starts on a pixel whose similarity index exceeds the threshold criterion and than moves so that the pixel with the highest similarity index, within the windows field of view, is always located at the center of the searching window and whose position represents the highest similarity index within the local cluster of values associated with the fastener.

4. A method according to any preceding claim, wherein the influence of the defect free fastener on the acquired image is removed by performing a pixel by pixel subtraction of the reference image from the acquired image for each of the fastener locations and then adding back, to each pixel, a value representing the average background value

5. A method according to any of claims 1 to 3, wherein the influence of the fastener on the acquired image is removed by performing a pixel by pixel subtraction of the reference image from the acquired image for each of the fastener locations, by subtracting the square of the pixel value in the reference image from the square of the corresponding pixel value in the acquired image and then adding back, to each pixel, a value representing the average background value.

6. A method according to any preceding claim, wherein the similarity between regions of the acquired image and the reference image is determined by normalized cross correlation.

7. A method according to any of claims 1 to 5, wherein the similarity between regions of the acquired image and the reference image is determined by comparing feature characteristics from both regions, such as wavelet coefficients, Fourier coefficients and principal components from both images.

8. A method according to any of claims 1 to 5, wherein the similarity between regions of the acquired image and the reference image is determined using a classification system or trained neural network for comparing extracted feature characteristics.

9. A system for inspecting defects close to fasteners, the system comprising:
an eddy current probe for scanning an object containing one or more fasteners and
a controller connectable to or including a screen, the controller being arranged to:
form an image, referred to as an acquired image, representing the measured signal as a function of position;
acquire an image of a defect free fastener, referred to as a reference image;
use the reference image to find instances of the fastener in the acquired image and
remove information in the acquired image that relates to the material of the defect free fastener to provide a resultant image.

10. A system according to claim 9, wherein the controller is arranged to determine the position of the fasteners by comparing the acquired and reference images to find regions of similarity, select the regions of higher similarity by applying a threshold criterion and then locating the alignment centre of each region by using a search algorithm that looks for the local maximum.

11. A system according to claim 9 or claim 10, wherein the controller is arranged to remove information in the acquired image that relates to the material of the fastener by performing a pixel by pixel subtraction of the reference image from the acquired image for each of the found fastener locations and then adding back to each pixel a value representing the average background value.

12. A system according to any of claims 9 to 11, wherein the controller is arranged to remove information in the acquired image that relates to the material of the fastener by performing a pixel by pixel subtraction of the reference image from the acquired image for each of the fastener locations or by subtracting the square of the pixel value in the reference image from the square of the corresponding pixel value in the acquired image and then adding back to each pixel a value representing the average background value.
